# EUROPEAN PATENT SPECIFICATION

(11) **EP 0 615 179 B1**
(45) Date of publication and mention of the grant of the patent: **08.07.1998**
(21) Application number: 93919564.0
(22) Date of filing: 24.08.1993
(51) Int. Cl.: G05B 19/409

(54) **NUMERIC CONTROLLER**
NUMERISCHE STEUERUNG
CONTROLEUR NUMERIQUE

(30) Priority: 31.08.1992 JP 231836/92
(43) Date of publication of application: 14.09.1994
(73) Proprietor: FANUC LTD., Minamitsuru-gun, Yamanashi 401-05 (JP)
(72) Inventor: KURAKAKE, Mitsuo, Tokyo 191 (JP); IKEDA, Yoshiaki 6-310, Fanuc Mansion Harimomi, Yamanashi 401-05 (JP)
(74) Representative: Brunner, Michael John
(86) International application number: JP9301186
(87) International publication number: WO9406067

(56) References cited:
- GB-A- 2 054 199
- GB-A- 2 094 023
- JP-A- 1 287 707
- JP-A-63 263 502
- JP-B-62 014 845
- TECHNISCHE RUNDSCHAU, vol.80, no.38, 16 September 1988, BERN,CH pages 36 - 39, XP000110997 HANS B. KIEF 'Mehr Vorteile durch Werkstattprogrammierung'

## Description

### Technical Field

The present invention relates to a numerical control apparatus for controlling a machine tool, and more particularly to a numerical control apparatus for controlling a machine tool which machines prototypes or the like.

### Background Art

Advances in the technology of numerically controlled machine tools have been so great that they can machine workpieces of complex shape at high speed with precision. At present, workpieces of complex shape cannot be machined without numerically controlled machine tools.

To generate machining programs, there are widely used interactive numerical control apparatus which comprise a numerical control apparatus with an interactive program generating function, and automatic programming apparatus for simply generating complex machining programs.

In the use of such numerical control apparatus, it is necessary to accurately define machine coordinates, a machine origin, program coordinates, a machining origin, and other data for generating strict machining programs. The interactive numerical control apparatus and the automatic programming apparatus can be used to machine a number of workpieces. However, a portion of a machining process for producing a prototype or a model is carried out solely at the discretion of the operator since no definite workpiece shapes are defined. Therefore, general purpose milling machines, lathes, or the like are used to machine prototypes or models.

Problems of general-purpose machine tools are that the number of available operators who can handle general-purpose machine tools is becoming smaller, and it is difficult for the general-purpose machine tools to carry out oblique linear machining, arcuate machining, or the like though they can effect linear machining without any problem.

If, on the other hand, a general numerically controlled machine tool is used to machine a prototype or a model, then it is necessary to accurately define machine coordinates, a machine origin, program coordinates, a machining origin, and other data. While it is not impossible to define those data, the required programming process is too time-consuming and troublesome for machining a portion of a single workpiece.

GB-A-2054199 discloses an NC machine tool with automatic machining program generation. US-A-4056850 discloses a system for processing incremental position data.

In view of the above problems of the conventional practice, it is an object of the present invention to provide a numerical control apparatus capable of easily carrying out simple machining of a prototype or the like with a general-purpose machine tool.

To achieve the above object, there is provided in accordance with the present invention a numerical control apparatus for controlling a machine tool having at least two axes, the apparatus comprising:
guidance function executing means for outputting guidance information with respect to a selected machining process,
a guidance display unit for displaying said guidance information; and
pulse distributing means for distributing pulses for said movement commands; characterised by
said guidance information including machining process selecting information for selecting types of machining processes;
a graphic control circuit for converting said guidance information into a graphic signal and sending the signal to the guidance display unit;
the guidance function executing means recognizing present positions of the respective axes, and outputting movement commands for the respective axes from command values for the respective axes and the present positions of the respective axes;
said pulse distributing means having a memory for storing the present positions of the respective axes;
and said machining processes including at least one of oblique linear machining, corner R machining, and corner C machining processes.

The guidance function executing means outputs guidance information with respect to a selected machining process, e.g., a corner R machining process. The guidance information is displayed on the guidance display unit. The operator enters command values for the respective axes in accordance with the guidance information.

The guidance function executing means calculates a movement command from recognized present positions of the respective axes and the command values for the respective axes, and outputs the calculated movement command. The pulse distributing means distributes pulses for the movement command.

The numerical control apparatus allows a portion of a prototype or the like to be easily machined.

### Brief Description of the Drawings

FIG. 1 is a schematic diagram of a numerical control apparatus according to the present invention;
FIG. 2 is a block diagram of a hardware arrangement of the numerical control apparatus according to the present invention;
FIG. 3 is a view showing a screen display image for selecting guidance functions;
FIG. 4 is a view showing a screen display image of machining guidance for oblique linear machining;
FIG. 5 is a view showing a screen display image of machining guidance for corner R machining;
FIG. 6 is a view showing a screen display image of machining guidance for corner C machining; and
FIG. 7 is a view showing a screen display image of machining guidance for full-circle machining.

### Best Mode For Carrying Out The Invention

An embodiment of the present invention will hereinafter be described below with reference to the drawings.

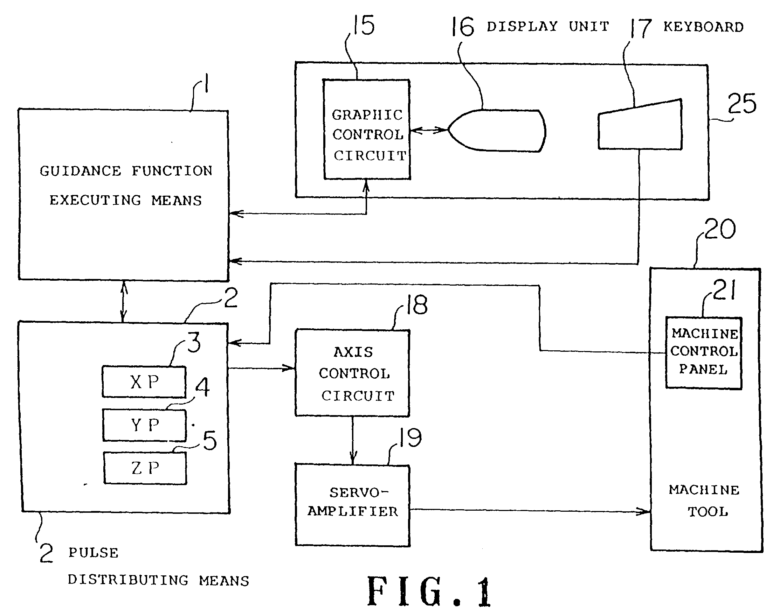

FIG. 1 schematically illustrates a numerical control apparatus according to the present invention. The numerical control apparatus includes a guidance function executing means 1 operable by a keyboard 17 for generating guidance information corresponding to a machining process and sending the guidance information to a graphic control circuit 15, which displays the guidance information on a display unit 16. Machining processes include an oblique linear machining process, a corner R machining process, etc., and will be described in detail later on.

The guidance function executing means 1 first recognizes a reference position. Specifically, when the recognition of such a reference position is commanded by position buttons for respective axes on a machine control panel 21 of a machine tool 20, the guidance function executing means 1 receives present positions (XP, YP, ZP) of the respective axes from a present position register 3 (X-axis), a present position register 4 (Y-axis), and a present position register 5 (Z-axis) for the respective axes of a pulse distributing means 2. Then, the guidance function executing means 1 subtracts the present positions of the respective axes from a commanded final position, and outputs movement commands for the respective axes to the pulse distributing means 2.

In accordance with the movement commands, the pulse distributing means 2 distributes pulses, and outputs the distributed pulses to an axis control circuit 18, which actually comprises three axis control circuits. In response to the distributed pulses, the axis control circuit 18 generates speed commands for the respective axes, and supplies the speed commands to a servoamplifier 19. The servoamplifier 19 energizes servomotors of the machine tool 20 for controlling the machine tool 20.

The guidance function executing means 1 and the pulse distributing means 2 are software-implemented as described later on.

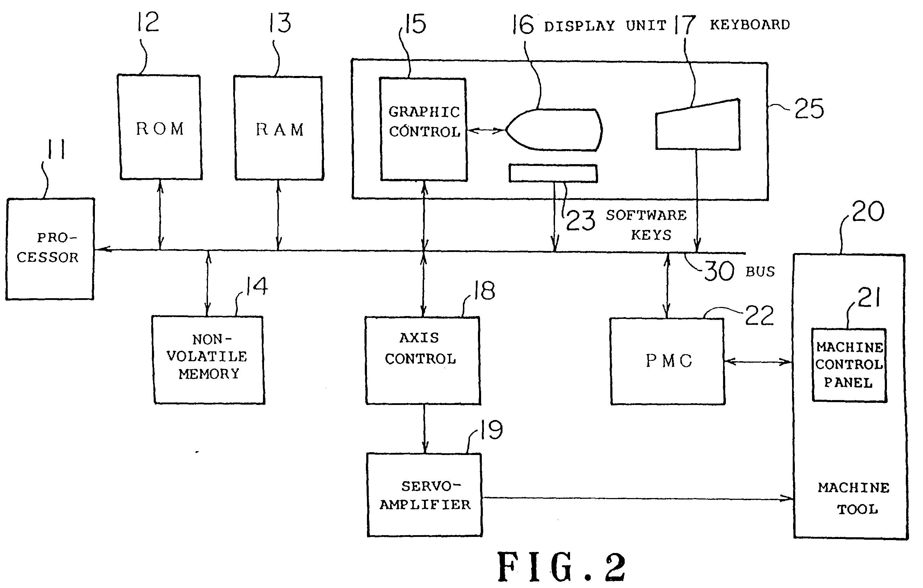

FIG. 2 shows in block form a hardware arrangement of the numerical control apparatus according to the present invention.

A processor 11 controls the numerical control apparatus in its entirety in accordance with a system program stored in a ROM 12. The guidance function executing means 1 and the pulse distributing means 2 shown in FIG. 1 are functions that are performed by the processor 11 in accordance with the system program stored in the ROM 12. The ROM 12 may comprise an EPROM or an EEPROM. A RAM 13, which may comprise an SRAM or the like, stores temporary data such as input and output signals. A nonvolatile memory 14 comprises a CMOS backed up by a battery (not shown), and stores various data such as parameters, machining programs, etc. that are to be retained after the power supply is turned off.

The graphic control circuit 15 converts guidance information into signals that can be displayed, and supplies the signals to the display unit 16. Details of the guidance information will be described later on. The display unit 16 may comprise a CRT or a liquid crystal display panel. When supplied with the movement commands for the respective axes from the processor 11, the axis control circuit 18 (three axis control circuits) outputs the movement commands for the respective axes to the servoamplifier 19 (three servoamplifiers for the respective axes). In response to the supplied movement commands, the servoamplifier 19 energizes the servomotors (not shown) of the machine tool 20. The components described above are interconnected by a bus 30.

A PMC (programmable controller) 22 receives a T function signal (tool selection command) through the bus 30 when a machining program is executed. The PMC 22 processes the received T function signal according to a sequence program, and outputs the processed signal as an operation command to control the machine tool 20. If the numerical control apparatus is of the interactive type, then the PMC 22 receives a status signal from the machine tool 20, processes the status signal according to sequential processing, and transfer an input signal required by the processor 11 through the bus 30.

To the bus 30, there are also connected software keys 23 whose function varies depending on the system program or the like. The software keys 23, the display unit 16, and the key board 17 are mounted on a CRT/MDI panel 25.

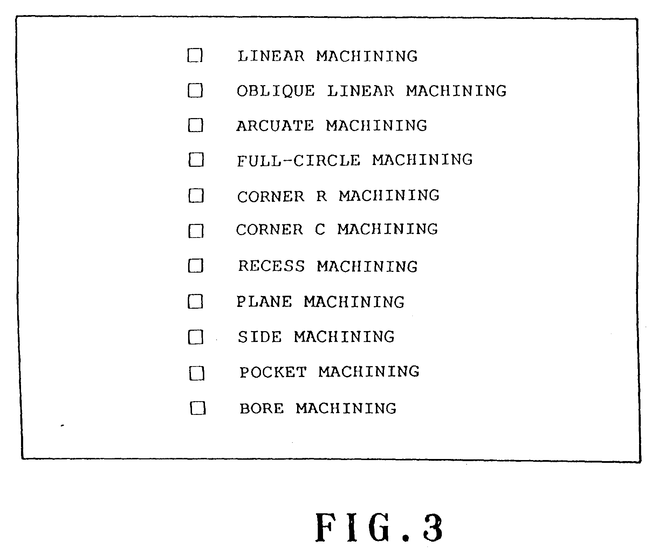

The guidance functions will be described in detail below. To perform a guidance function, the operator selects a screen display image for selecting the guidance function as shown in FIG. 3. The screen display image for selecting the guidance function has various machining processes including linear machining, oblique linear machining, arcuate machining, full-circle machining, corner R machining, corner C machining, recess machining, plane machining, side machining, pocket machining, and bore machining. The operator selects one of the types of machining processes which is to be used, with the software keys 23 shown in FIG. 2. The procedure for selecting one of the machining processes will not be described as it is well known in the art as a function of normal numerical control apparatus.

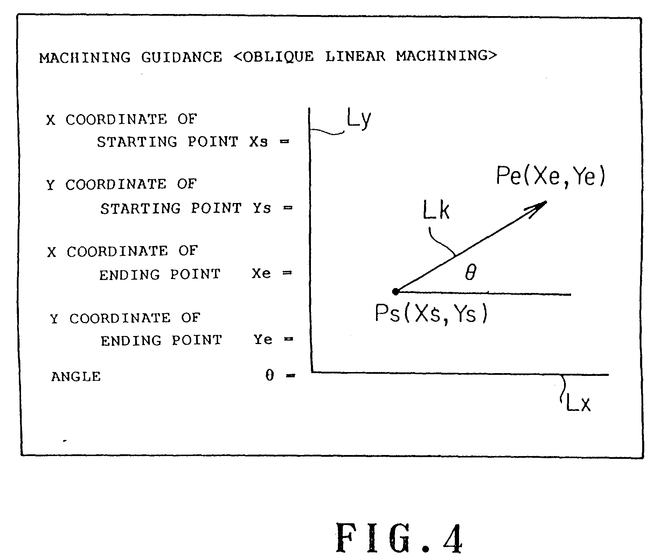

The guidance function for the oblique linear machining will be described below. FIG. 4 shows a screen display image of machining guidance for oblique linear machining.

According to a first method, the operator designates the coordinates (Xs, Ys) of a starting point Ps and the coordinates (Xe, Ye) of an ending point Pe. However, since no coordinates are available unlike ordinary numerical control apparatus, distances from planes that have already been machined are used as those coordinates. For example, planes that has already been machined is indicated by Lx, Ly, and the operator designates distances from the planes. The operator commands the coordinates of the planes Lx, Ly from the machine control panel 21 (FIG. 1) before actual oblique linear machining is carried out. More specifically, when the operator presses a Y-axis position button (not shown) at the time the plane Lx is machined, the position YP in the present position register 4 for the Y-axis is sent to the guidance function executing means 1. Similarly, when the operator presses a X-axis position button at the time the plane Ly is machined, the position XP in the present position register 3 for the X-axis is sent to the guidance function executing means 1. Now, a coordinate system of Lx, Ly shown in FIG. 4 is generated in the guidance function executing means 1. The operator then designates the coordinates (Xs, Ys) of a starting point Ps and the coordinates (Xe, Ye) of an ending point Pe with respect to the planes Lx, Ly, whereupon an oblique straight line Lk is generated in the guidance function executing means 1. When the operator presses a start button (not shown) on the machine control panel 21, the guidance function executing means 1 sends a movement command corresponding to the straight line Lk to the pulse distributing means 2. According to the supplied movement command, the pulse distributing means 2 distributes pulses for the straight line Lk.

According to a second method, it is assumed that the tool is located at a starting point Ps, and the operator presses the X- and Y-axis position buttons on the machine control panel 21 to send present positions XP, YP from the pulse distributing means 2 to the guidance function executing means 1. Then, the operator designates an ending point Pe to define a straight line Lk. The subsequent procedure is the same as the first method.

According to a third method, it is assumed that the tool is located at a starting point Ps, and the starting point Ps is recognized by the guidance function executing means 1, as with the first method. However, the operator does not designate an ending point Pe, but designates an angle θ only. The tool then moves on a straight line Lk, and the operator presses a stop button (not shown) on the machine control panel 21 to determine an ending point.

According to a fourth method, the operator designates a starting point Ps and an angle θ only, and an ending point is determined when the operator presses the stop button.

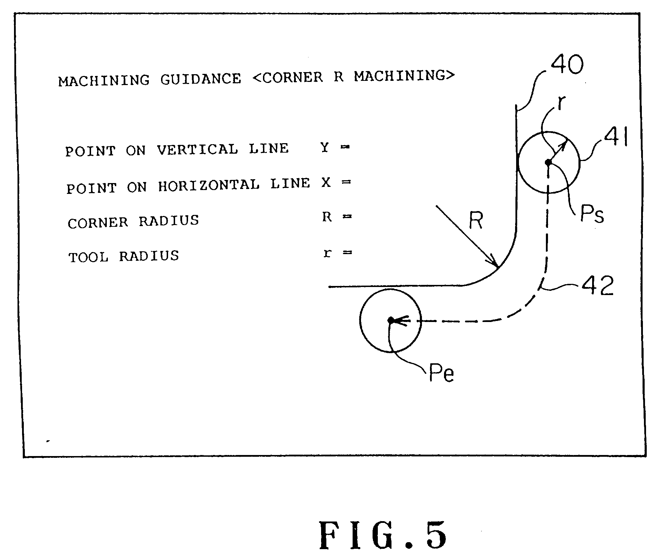

The guidance function for the corner R machining will be described below. FIG. 5 shows a screen display image of machining guidance for corner R machining. First, a tool 41 is moved from the right until it actually abuts against a workpiece 40. Then, the operator presses the X- and Y-axis position buttons, whereupon a point X on a horizontal line is displayed. The tool 41 is then moved from below until it actually abuts against the workpiece 40. The operator presses the X- and Y-axis position buttons, whereupon a point Y on a vertical line is displayed. As with the oblique linear machining, the above procedure causes the guidance function executing means 1 to recognize the positions of standing and ending points Ps, Pe for the tool.

Thereafter, the operator enters a corner radius R and a tool radius r. The guidance function executing means 1 calculates a machining path 42, sends a movement command to the pulse distributing means 2, which distributes pulses for the machining path 42.

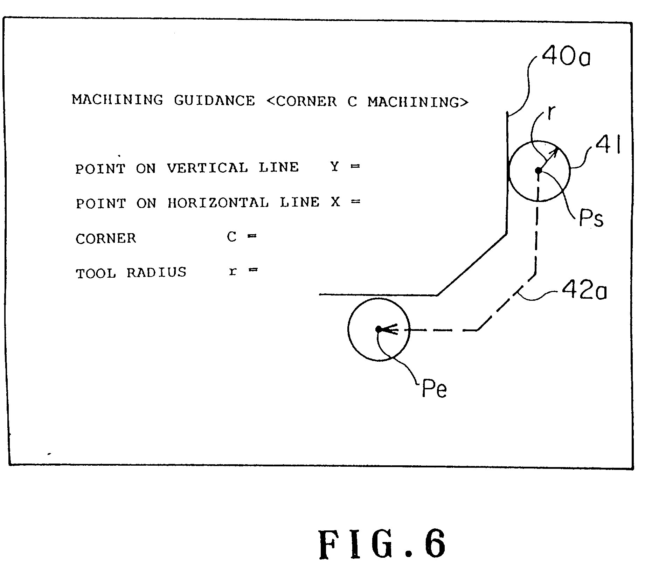

The guidance function for the corner C machining will be described below. FIG. 6 shows a screen display image of machining guidance for corner C machining. The corner C machining is substantially the same as the corner R machining except that a corner C is designated instead of the corner R, the corner of a workpiece 40a has the corner C, and a machining path 42a is represented by a polygonal line. Therefore, details of the guidance function for the corner C machining will not be described below.

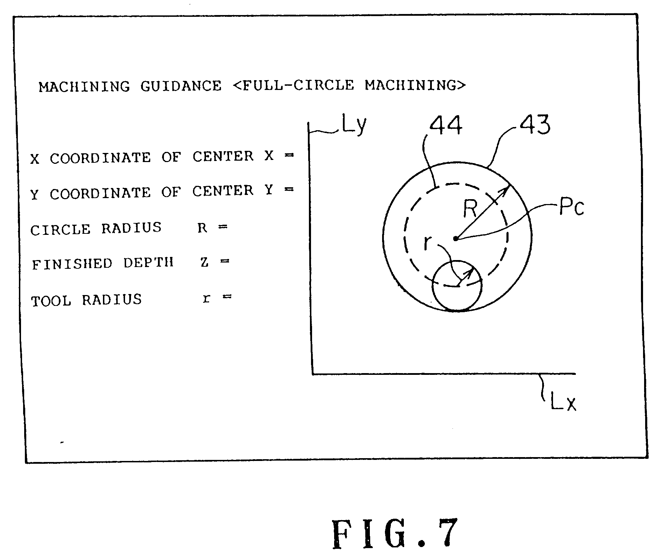

The guidance function for the full-circle machining will be described below. FIG. 7 shows a screen display image of machining guidance for full-circle machining. It is assumed that a workpiece is to be machined within a circle to a depth of Z. Planes Lx, Ly are defined in the same manner as the method described with reference to FIG. 4. The operator designates the X and Y coordinates (Xc, Yc) of the center Pc of a full circle 43, a circle radius R, a finished depth Z, and a tool radius r.

The guidance function executing means 1 calculates a machining path 44 from these designated values, and sends the calculated machining path 44 to the pulse distributing means 2, which distributes pulses for the machining path 44.

No feed speed has been referred to in the above description. However, each screen display image for machining guidance may include an item of feed speed F for the operator to designate. Alternatively, an override switch of the numerical control apparatus may be used.

Some machining guidance functions have been described above. It can readily be understood, however, that other machining guidance functions can be performed in the same manner as described above.

Consequently, when guidance information is displayed as a guidance image, the operator can define machining commands according to the displayed guidance information for easily achieving machining or the like of a portion of a prototype. The operator can thus machine a portion of a prototype or the like as if with an ordinary general-purpose milling machine, without concern over machine coordinates, a machine origin, a machining origin, and other data.

In the above description, the present invention has been described as being applied to the functions of a milling machine. However, the principles of the present invention are also applicable to the functions of a lathe or the like.

The guidance functions may be incorporated in an ordinary numerical control apparatus, or may be arranged as an especially inexpensive numerical control apparatus.

With the present invention, as described above, guidance information is displayed, and a movement command is outputted to the pulse distributing means according to command values designated by the operator. Accordingly, a portion of a prototype or the like can easily be machined as if with a general-purpose machine tool without the operator's being concerned with a coordinate system, origins, and other data.

## Claims

1. A numerical control apparatus for controlling a machine tool having at least two axes, the apparatus comprising:
guidance function executing means (1) for outputting guidance information with respect to a selected machining process,
a guidance display unit (16) for displaying said guidance information; and
pulse distributing means for distributing pulses for said movement commands; characterised by
said guidance information including machining process selecting information for selecting types of machining processes;
a graphic control circuit (15) for converting said guidance information into a graphic signal and sending the signal to the guidance display unit (16);
the guidance function executing means (1) recognizing present positions of the respective axes, and outputting movement commands for the respective axes from command values for the respective axes and the present positions of the respective axes;
said pulse distributing means (2) having a memory for storing the present positions of the respective axes; and
and said machining processes including at least one of oblique linear machining, corner R machining, and corner C machining processes.

2. A numerical control apparatus according to claim 1, wherein said pulse distributing means (2) sends said present positions to said guidance function executing means (1) in accordance with an external command.

## Patentansprüche

1. Numerische Steuerung für eine Werkzeugmaschine mit mindestens zwei Achsen, wobei die Steuerung aufweist:
Mittel (1) zum Ausführen einer Führungsfunktion zur Ausgabe von Führungsinformationen für ein ausgewähltes Bearbeitungsverfahren;
eine Führungsanzeigeeinheit (16) zur Anzeige der Führungsinformationen und
Impulsabgabemittel zur Abgabe von Impulsen für Bewegungsbefehle,
dadurch gekennzeichnet, daß
die Führungsinformationen eine Auswahlinformation zur Wahl des Bearbeitungsverfahrens aufweisen,
eine Graphik-Steuerschaltung zum Umwandeln der Führungsinformationen in ein Graphiksignal und zur Abgabe des Signals an die Führungsanzeigeeinheit (16) vorgesehen ist,
die Mittel (1) zum Ausführen der Führungsfunktion stellen die aktuelle Position der entsprechenden Achsen fest und einen Bewegungsbefehl für die jeweiligen Achsen, ausgehend von Steuerwerten und von der aktuellen Position der jeweiligen Achsen,
die Impulsabgabemittel (2) einen Speicher für die aktuellen Positionen der einzelnen Achse aufweisen und
das Bearbeitungsverfahren mindestens eine schräglinige Bearbeitung, eine Ecken-R-Bearbeitung und Ecken-C-Bearbeitung einschließt.

2. Numerische Steuerung nach Anspruch 1, bei der die Impulsabgabemittel (2) die aktuelle Position zu den Mitteln (1) zum Ausführen der Führungsfunktion (2) entsprechend einem externen Befehl senden.

## Revendications

1. Appareil de commande numérique pour commander une machine-outil possédant au moins deux axes, l'appareil comprenant:
des moyens (1) d'exécution d'une fonction de guidage pour délivrer une information de guidage par rapport à un processus d'usinage choisi,
une unité (16) d'affichage du guidage, pour afficher ladite information de guidage; et
des moyens de distribution d'impulsions, pour délivrer des impulsions pour des instructions de déplacement;
caractérisé en ce que
ladite information de guidage comprend une information de sélection du processus d'usinage pour choisir des types de processus d'usinage;
un circuit (15) de commande graphique pour transformer ladite information de guidage en un signal graphique et envoyer le signal à l'unité (16) d'affichage du guidage;
les moyens (1) d'exécution d'une fonction de guidage reconnaissent des positions actuelles des axes respectifs, et délivrent des instructions de déplacement pour les axes respectifs, à partir de valeurs d'instruction pour les axes respectifs et les positions actuelles des axes respectifs;
lesdits moyens (2) de distribution d'impulsions ont une mémoire pour mémoriser les positions actuelles des axes respectifs; et
lesdits processus d'usinage comprennent au moins l'un parmi des processus d'usinage linéaire oblique, d'usinage d'un coin à congé arrondi ("corner R") et d'usinage d'un coin à congé chanfreiné ("corner C").

2. Appareil de commande numérique selon la revendication 1, dans lequel lesdits moyens (2) de distribution d'impulsions envoient lesdites positions actuelles auxdits moyens (1) d'exécution d'une fonction de guidage en conformément à une instruction venant de l'extérieur.
